# EUROPEAN PATENT SPECIFICATION

(11) **EP 2 504 388 B1**
(45) Date of publication and mention of the grant of the patent: **10.08.2016**
(21) Application number: 10779904.1
(22) Date of filing: 17.11.2010
(51) Int. Cl.: C08K 5/28, C08L 23/02, C08K 5/00, C08K 5/43

(54) **COMPOSITIONS, FILMS AND METHODS OF PREPARING THE SAME**
ZUSAMMENSETZUNGEN, FILME UND HERSTELLUNGSVERFAHREN
COMPOSITIONS, PELLICULES AINSI QUE PROCÉDÉS DE LEUR FABRICATION

(30) Priority: 23.11.2009 US 263613 P
(43) Date of publication of application: 03.10.2012
(73) Proprietor: Dow Global Technologies LLC, Midland, MI 48674 (US)
(72) Inventor: NEUBAUER, Anthony, Piscataway NJ 08854 (US); MICHIE, William, Missouri City TX 77459 (US)
(74) Representative: Boult Wade Tennant
(86) International application number: PCT/US2010/056984
(87) International publication number: WO 2011/062961

(56) References cited:
- WO-A1-01/66632
- WO-A1-99/10415

## Description

### BACKGROUND

The invention relates to compositions used to form films with improved Bubble Stability (BS) and Dart Impact Strength (DIS), while maintaining Film Appearance Rating (FAR) values, and minimizing changes in the natural properties of the untreated polymer. It is known that oxygen tailoring incorporates long chain branches (LCB's) into the product, which lowers the Dart Impact Strength, and changes the rheology properties of the polymer, notably, tan delta. In International Publication No. WO 2006/065651, it was shown that film could be produced using a resin modified with an azide compound. However, typically high levels of the azide (for example, 100 µg/g of a poly(sulfonyl azide) were needed to give the balance of good bubble stability and dart impact strength. Such high coupling agent levels typically may result in a significantly crosslinked polymer structure, which, in turn, results in higher viscosity and higher processing pressures and energy requirements.

Additional azide modified and/or crosslinked polymers or blends are disclosed in the following: U.S. Patents 6,552,129 (see also 6,143,829); 6,777,502 (see also 6,528,136); 6,506,848 (see also 6,376,623); 6,325,956; 5,869,591; 6,531,546; 6,040,351; 5,973,017; 5,242,971; 6,521,306; 6,776,924; and International Publication WO 00/26268.

Thus, there remains a need for compositions that can be used to form films with improved bubble stability and dart impact strength, while maintaining good Film Appearance Rating (FAR) values. There is a further need for such compositions that result in minimal changes to the natural properties of the untreated polymer. There is also a need for such film compositions that are lower in cost, as compared to comparable, conventional film compositions. These needs have been met by the following invention.

### SUMMARY OF THE INVENTION

The invention provides a composition comprising at least the following (A and B): A) a first composition comprising a first ethylene-based polymer, wherein the ratio, I₂₁ (first composition) / I₂₁ (first ethylene-based polymer), is greater than, or equal to, 30; and B) one or more azide compounds in an amount from 10 µg/g to 40 µg/g (based on the weight of the composition).

### BRIEF DESCRIPTION OF THE DRAWINGS

Figure 1 depicts tan δ as a function of azide concentration in Resin I.
Figure 2 depicts the "% Reduction in tan delta" as a function of azide concentration in Resin I.

### DETAIL DESCRIPTION OF THE INVENTION

As discussed above, the invention provides a composition comprising at least the following (A and B):
A) a first composition comprising an ethylene-based polymer (or a first ethylene-based polymer), wherein the ratio, I₂₁ (first composition) / I₂₁ (first ethylene-based polymer), is greater than, or equal to, 30; and
B) one or more azide compounds in an amount from 10 µg/g to 40 µg/g (based on the weight of the composition).

In one embodiment, the one or more azide compounds are present in an amount from 10 µg/g to 35 µg/g, preferably from 10 µg/g to 30 µg/g (based on the weight of the composition).

In one embodiment, the one or more azide compounds are present in an amount from 15 µg/g to 35 µg/g, preferably from 20 µg/g to 30 µg/g (based on the weight of the composition).

In one embodiment, the first composition has a density greater than 0.940 g/cm³, preferably greater than 0.945 g/cm³.

In one embodiment, the first composition has a flow rate ratio (I₂₁/I₅) from 25 to 45, preferably from 30 to 40.

In one embodiment, the first composition has a high load melt index (I₂₁) from 6 dg/min to 12 dg/min, preferably from 7 dg/min to 10 dg/min.

In one embodiment, the first ethylene-based polymer has a density greater than, or equal to, 0.920 g/cm³, preferably greater than, or equal to, 0.924 g/cm³ (1 cm³ = 1 cc).

In one embodiment, the first ethylene-based polymer has a high load melt index (I₂₁) less than, or equal to, 0.40 dg/min, preferably less than, or equal to, 0.38 dg/min, more preferably less than, or equal to, 0.35 dg/min.

In one embodiment, the first ethylene-based polymer has a high load melt index (I₂₁) greater than, or equal to, 0.20 dg/min, preferably greater than, or equal to, 0.25 dg/min.

In one embodiment, the first ethylene-based polymer is an ethylene/α-olefin interpolymer, and preferably an ethylene/α-olefin copolymer. In a further embodiment, the α-olefin is selected from the group consisting of C₃-to-C₁₂ α-olefins. In a further embodiment, the α-olefin is selected from the group consisting of propylene, 1-butene, 1-hexene, and 1-octene, more preferably 1-hexene and 1-octene, and even more preferably 1-hexene.

The first ethylene-based polymer may comprise a combination of two or more embodiments as described herein.

In one embodiment, the first composition comprises from 50 to 60 percent by weight, preferably from 50 to 58 weight percent, more preferably from 52 to 58 weight percent, of the first ethylene-based polymer, based on the weight of the first composition.

In one embodiment, the first composition comprises a second ethylene-based polymer. In a further embodiment the second ethylene-based polymer is an ethylene/α-olefin interpolymer, and preferably an ethylene/α-olefin copolymer. In a further embodiment, the α-olefin is selected from the group consisting of C₃-to-C₁₂ α-olefins. In a further embodiment, the α-olefin is selected from the group consisting of propylene, 1-butene, 1-hexene, and 1-octene, more preferably 1-hexene and 1-octene, and even more preferably 1-hexene. The second ethylene-based polymer differs from the ethylene-based polymer (or first ethylene-based polymer) in one or more of the following properties: melt index (I₂), high load melt index (I₂₁), and/or density.

In one embodiment, the second ethylene-based polymer has a density greater than that of the first ethylene-based polymer (or first ethylene-based polymer). In a further embodiment, the second ethylene-based polymer has a density that is at least "0.010 g/cm³" greater than that of the first ethylene-based polymer. In a further embodiment, the melt index (I₂) of the second ethylene-based polymer is greater than the melt index (I₂) of the first ethylene-based polymer.

The first ethylene-based polymer may comprise a combination of two or more embodiments as described herein.

In one embodiment, the first composition comprises greater than 95 weight percent, preferably greater than 98 weight percent, more preferably greater than 99 weight percent, of the sum of the first ethylene-based polymer and second ethylene-based polymer, based on the weight of the first composition.

In one embodiment, the composition comprises greater than 80 weight percent, preferably greater than 90 weight percent, more preferably greater than 95 weight percent, of the first composition, based on the weight of the composition. In a further embodiment, the first composition comprises greater than 95 weight percent, preferably greater than 98 weight percent, more preferably greater than 99 weight percent, of the sum of the first ethylene-based polymer and second ethylene-based polymer, based on the weight of the first composition.

The first composition may comprise a combination of two or more embodiments as described herein.

The invention also provides a film, comprising at least one layer (or ply) formed from an inventive composition. In a further embodiment, the film has a Dart Impact Strength greater than 400 g, preferably greater than 450 g, and more preferably greater than 470 g, as determined by ASTM D1709-04 Method A.

The invention also provides an article comprising at least one component formed from an inventive composition. In a further embodiment, the article is selected from a pipe, a container, or a molded part (for example, an injection molded part, a blow molded part, or a compression molded part).

The invention also provides an article formed from an inventive composition.

In one embodiment, the inventive composition is in the form of a pellet or a powder. In a further embodiment, the inventive composition is in the form of a pellet. In another embodiment, the inventive composition is in the form of a powder.

An inventive composition may comprise a combination of two or more embodiments as described herein.

An inventive film may comprise a combination of two or more embodiments as described herein.

An inventive article may comprise a combination of two or more embodiments as described herein.

### Compositions

In one embodiment, the first ethylene-based polymer is a heterogeneously branched linear ethylene-based interpolymer, a homogeneously branched linear ethylene-based interpolymer, or a homogeneously branched substantially linear ethylene-based interpolymer, and preferably a heterogeneously branched linear ethylene-based interpolymer or a homogeneously branched linear ethylene-based interpolymer, and more preferably a heterogeneously branched linear ethylene-based interpolymer. As known in the art, the heterogeneously branched linear and homogeneously branched linear interpolymers have short chain branching due to the incorporation of comonomer into the growing polymer chain. These linear interpolymers lack long chain branching, or measurable amounts of long chain branching, as determined by techniques known in the art, such as NMR spectroscopy (for example, 1C NMR as described by Randall, Rev. Macromal. Chem. Phys., C29 (2&3), 1989, pp. 285-293).

In one embodiment, the second ethylene-based polymer is a heterogeneously branched linear ethylene-based interpolymer, a homogeneously branched linear ethylene-based interpolymer, or a homogeneously branched substantially linear ethylene-based interpolymer, and preferably a heterogeneously branched linear ethylene-based interpolymer or a homogeneously branched linear ethylene-based interpolymer, and more preferably a heterogeneously branched linear ethylene-based interpolymer.

Heterogeneously branched linear ethylene interpolymers can be made in a solution, slurry, or gas phase process, using a Ziegler-Natta type catalyst. For example, see U.S. Patent 4,339,507. Heterogeneously branched linear ethylene-based interpolymers differ from the homogeneously branched ethylene-based interpolymers, primarily in their comonomer branching distribution. For the heterogeneous polymers, both the molecular weight distribution, and the short chain branching distribution are relatively broad compared to homogeneously branched linear and homogeneously branched linear substantially linear ethylene interpolymers. For example, heterogeneously branched interpolymers have a branching distribution, in which the polymer molecules do not have the same comonomer-to-ethylene ratio. For example, heterogeneously branched LLDPE (linear low density polyethylene) polymers have a distribution of branching that typically includes a highly branched portion (similar to a very low density polyethylene), a medium branched portion (similar to a medium density polyethylene) and an essentially linear portion (similar to linear homopolymer polyethylene).

The terms "homogeneous" and "homogeneously-branched" are used in reference to an ethylene-based interpolymer (for example, ethylene/α-olefin copolymers), in which the comonomer is randomly distributed within a given polymer molecule, and all the polymer molecules have the same or substantially the same comonomer-to-ethylene ratio. Some examples of "homogeneously branched substantially linear interpolymers," are described in U.S. Patents 5,272,236 and 5,278,272. As discussed above, the heterogeneously branched linear and homogeneously branched linear interpolymers have short chain branching due to the incorporation of comonomer into the growing polymer chain. The long chain branch of a homogeneously branched substantially linear interpolymers is longer than that due to the incorporation of one comonomer into the growing polymer chain.

In one embodiment, the first ethylene-based polymer is an ethylene/α-olefin interpolymer, and preferably an ethylene/α-olefin copolymer. In a preferred embodiment, the α-olefin is a C₃-to-C₂₀ α-olefin, preferably a C₄-to-C₁₂ α-olefin, more preferably a C₄-to-C₈ α-olefin, and most preferably C₆-to-C₈ α-olefin. The α-olefins include propylene 1-butene, 1-pentene, 1-hexene, 4-methyl-1-pentene, 1-heptene, and 1-octene. Preferred α-olefins include propylene, 1-butene, 1-hexene, and 1-octene. Especially preferred α-olefins include 1-hexene and 1-octene, and more preferably 1-hexene. Preferred interpolymers include the following copolymers: ethylene/butene (EB) copolymers, ethylene/hexene-1 (EII), ethylene/octene-1 (EO) copolymers, more preferably, EH and EO copolymers, and most preferably EH copolymers.

In one embodiment, the second ethylene-based polymer is an ethylene/α-olefin interpolymer, and preferably an ethylene/α-olefin copolymer. In a preferred embodiment, the α-olefin is a C₃-to-C₂₀ α-olefin, preferably a C₄-to-C₁₂ α-olefin, more preferably a C₄-to-C₈ α-olefin, and most preferably C₆-to-C₈ α-olefin. The α-olefins include propylene 1-butene, 1-pentene, 1-hexene, 4-methyl-1-pentene, 1-heptene, and 1-octene. Preferred α-olefins include propylene, 1-butene, 1-hexene, and 1-octene. Especially preferred α-olefins include 1-hexene and 1-octene, and more preferably 1-hexene. Preferred interpolymers include the following copolymers: ethylene/butene (EB) copolymers, ethylene/hexene-1 (EH), ethylene/octene-1 (EO) copolymers, more preferably, EH and EO copolymers, and most preferably EH copolymers.

The first ethylene-based polymer may comprise a combination of two or more embodiments as described herein.

The second ethylene-based polymer may comprise a combination of two or more embodiments as described herein.

The first composition may comprise one or more additives. Suitable additives include, for example, stabilizers, such as antioxidants, such as IRGANOX-1076 and/or IRGANOX-1010; and one or more metal stearates, such as zinc stearate and/or calcium stearate.

The first composition may also contain one or more additional polymers. When additional polymers are present, they may be selected from any of the modified or unmodified polymers described herein and/or any modified or unmodified polymers of other types.

An inventive composition may comprise one or more additives. Suitable additives include, for example, stabilizers, such as antioxidants, such as IRGANOX-1076 and/or IRGANOX-1010; and one or more metal stearates, such as zinc stearate and/or calcium stearate.

An inventive composition may also contain one or more additional polymers. When additional polymers are present, they may be selected from any of the modified or unmodified polymers described herein and/or any modified or unmodified polymers of other types.

The first composition may comprise a combination of two or more embodiments as described herein.

An inventive composition may comprise a combination of two or more embodiments as described herein.

### Polymerization

The novel composition can be made by a variety of methods. For example, it may be made by blending or mixing polymer components, or by melt blending the individually melted components. Alternatively, it may be made *in situ,* in one or more polymerization reactors.

In one embodiment, a dual reactor configuration is used. In a further embodiment, the catalyst precursor and the cocatalyst are introduced in the first reactor, and the polymerizing mixture is transferred to the second reactor for further polymerization. Insofar as the catalyst system is concerned, only cocatalyst, if desired, is added to the second reactor from an outside source. Optionally, the catalyst precursor may be partially activated prior to the addition to the reactor, followed by further "in reactor" activation by the cocatalyst.

In the preferred dual reactor configuration, a relatively high molecular weight (low "high load melt index") polymer is prepared in the first reactor, and a lower molecular weight polymer (high melt index) is produced in the second reactor. The polymerization in each reactor is preferably conducted in the gas phase, using a continuous fluidized bed process.

Multi-stage, gas-phase processes are described in U.S. Patents 5,047,468 and 5,149,738. Two or more reactors may be run in parallel, or in series, or in a combination thereof.

The preferred catalysts used in the process to make the compositions of the present invention are of the magnesium/titanium type. In one embodiment, the catalyst is made from a precursor comprising magnesium and titanium chlorides in an electron donor solvent. This solution is often either deposited on a porous catalyst support, or a filler is added, which, on subsequent spray drying, provides additional mechanical strength to the particles. The solid particles from either support methods are often slurried in a diluent, producing a high viscosity mixture, which is then used as catalyst precursor. Exemplary catalyst types are described in U.S. Patents 6,187,866 and 5,290,745. Precipitated/crystallized catalyst systems, such as those described in U.S. Patents 6,511,935 and 6,248,831, may also be used.

A cocatalyst, or activator, is also fed to the reactor to effect the polymerization. Complete activation by additional cocatalyst is required to achieve full activity. The complete activation normally occurs in the polymerization reactor, although the techniques taught in European Patent 1,200,483 may also be used.

The catalysts feed may be selected from several configurations, including a supported catalyst system, a spray dried catalyst system, or a solution or liquid fed catalyst system. Polymerization catalysts typically contain a supported transition metal compound and an activator, capable of converting the transition metal compound into a catalytically active transition metal complex.

Mixed metal catalysts systems, containing two or more catalyst types, of different molecular structure, may also be used in one reactor. For example, a mixed system containing two different Ziegler-Natta catalysts may be used in one reactor.

In a preferred embodiment, the polymerization in each reactor is conducted in the gas phase using a continuous fluidized bed process. In a typical fluidized bed reactor, the bed is usually made up of the same granular resin that is to be produced in the reactor. Thus, during the course of the polymerization, the bed comprises formed polymer particles, growing polymer particles, catalyst particles fluidized by polymerization, and modifying gaseous components introduced at a flow rate or velocity, sufficient to cause the particles to separate and act as a fluid. The fluidizing gas is made up of the initial feed, make-up feed, and cycle (recycle) gas, that is, comonomers, and, if desired, modifiers, and/or an inert carrier gas.

The basic parts of the reaction system are the vessel, the bed, the gas distribution plate, inlet and outlet piping, a compressor, cycle gas cooler, and a product discharge system. In the vessel, above the bed, there is a velocity reduction zone, and, in the bed, a reaction zone. Both are above the gas distribution plate. A typical fluidized bed reactor is further described in U.S. Patent 4,482,687.

The gaseous feed streams of ethylene, other gaseous alpha-olefins, and hydrogen, when used, are preferably fed to the reactor recycle line, as well as liquid alpha-olefins and the cocatalyst solution. Optionally, the liquid cocatalyst can be fed directly to the fluidized bed. The partially activated catalyst precursor is preferably injected into the fluidized bed as a mineral oil slurry. Activation is generally completed in the reactors by the cocatalyst. The product composition can be varied by changing the molar ratios of the monomers introduced into the fluidized bed. The product is continuously discharged, in granular or particulate form, from the reactor, as the bed level builds up with polymerization. The production rate is controlled by adjusting the catalyst feed rate and/or the ethylene partial pressures in both reactors.

A preferred mode is to take batch quantities of product from the first reactor, and transfer these to the second reactor, using the differential pressure generated by the recycle gas compression system. A system, similar to that described in U.S. Patent 4,621,952 particularly useful.

The pressure is about the same in both the first and second reactors. Depending on the specific method used to transfer the mixture of polymer and contained catalyst from the first reactor to the second reactor, the second reactor pressure may be either higher than, or somewhat lower than, that of the first. If the second reactor pressure is lower, this pressure differential can be used to facilitate transfer of the polymer catalyst mixture from Reactor 1 to Reactor 2. If the second reactor pressure is higher, the differential pressure across the cycle gas compressor may be used as the motive force to move polymer. The pressure, that is, the total pressure in the reactor, can be in the range of (200 psig to 500 psig), 1380 kPa gauge to 3450 kPa gauge and is preferably in the range of 1720 kPa gauge to 3100 kPa gauge (250 psig to 450 psig). The ethylene partial pressure in the first reactor can be in the range of 70 kPa gauge to 1030 kPa gauge (10 psig to 150 psig), and is preferably in the range of 140 kPa gauge to 550 kPa gauge (20 psig to 80 psig). The ethylene partial pressure in the second reactor is set, according to the desired amount of copolymer to be produce in this reactor, to achieve the desired split. It is noted that increasing the ethylene partial pressure in the first reactor leads to an increase in ethylene partial pressure in the second reactor. The balance of the total pressure is provided by an alpha-olefin, other than ethylene, and an inert gas, such as nitrogen. Other inert hydrocarbons, such as an induced condensing agent, for instance, isopentane or hexane, also contribute to the overall pressure in the reactor, according to their vapor pressure under the temperature and pressure experienced in the reactor.

The hydrogen-to-ethylene mole ratio can be adjusted to control average molecular weights. In one embodiment, the alpha-olefins (other than ethylene) can be present in a total amount of up to 15 percent, by weight, of the copolymer, and, if used, are preferably included in the copolymer in a total amount from 1 to 10 percent by weight, based on the weight of the copolymer.

The residence time of the mixture of reactants, including gaseous and liquid reactants, catalyst, and resin, in each fluidized bed, can be in the range from 1 hour to 12 hours, and is preferably in the range from 1.5 hours to 5 hours.

The reactors can be run in the condensing mode, if desired. The condensing mode is described in U.S. Patents 4,543,399; 4,588,790; and 5,352,749. In the most preferred dual reactor configuration, a relatively low "high load melt index" (or high molecular weight) polymer is usually prepared in the first reactor. Alternatively, the low molecular weight polymer can be prepared in the first reactor, and the high molecular weight polymer can be prepared in the second reactor. For purposes of the present disclosure, the reactor in which the conditions are conducive to making a high molecular weight polymer is known as the "high molecular weight reactor." Alternatively, the reactor in which the conditions are conducive to making a low molecular weight polymer is known as the "low molecular weight reactor." Irrespective of which component is made first, the mixture of polymer and an active catalyst is preferably transferred from the first reactor to the second reactor, via an interconnecting device, using nitrogen or a second reactor recycle gas as a transfer medium. Additional reactors in series are optionally used to make further modifications to improve the product processability, dart impact, or bubble stability. In configurations where there are more than two reactors, the reactor referred to as the "high molecular weight reactor," is that in which the highest molecular weight polymer is prepared, and the "low molecular weight reactor" is the one, in which the lowest molecular weight polymer is prepared. The use of more than two reactors is useful to add small amounts, for instance 1% to 10% of polymer, of a molecular weight intermediate to the molecular weights made in the other two reactors.

### High Molecular Weight Reactor:

In one embodiment, the mole ratio of alpha-olefin to ethylene in this HMW reactor is advantageously in the range from 0.01:1 to 0.8:1, and is preferably in the range from 0.02:1 to 0.35:1.

The mole ratio of hydrogen (if used) to ethylene in this reactor can be in the range from 0.001:1 to 0.3:1, preferably from 0.01 to 0.2:1.

Preferred operating temperatures vary, depending on the density desired, that is, lower temperatures for lower densities and higher temperatures for higher densities. Operating temperature advantageously varies from 70°C to 115°C.

The high load melt index, I₂₁, of the HMW ethylene-based polymer made in this reactor is advantageously in the range from 0.01 dg/min to 50 dg/min, preferably from 0.2 dg/min to 12 dg/min, more preferably from 0.2 dg/min to 2 dg/min, and even more preferably from 0.2 dg/min to 0.4 dg/min. In a further embodiment, the HMW ethylene-based polymer is the first ethylene-based polymer.

In one embodiment, the melt flow ratio, I₂₁/I₅, of the HMW ethylene-based polymer is advantageously in the range from 5 to 15, preferably from 7 to 13. In a further embodiment, the HMW ethylene-based polymer is the first ethylene-based polymer.

The molecular weight, Mw (as measured by Gel Permeation Chromatography) of this polymer is advantageously in the range from 135,000 g/mole to 445,000 g/mole, In a further embodiment, the HMW ethylene-based polymer is the first ethylene-based polymer.

The density of the polymer is advantageously at least 0.860 g/cm³, and is preferably in the range from 0.890 g/cm³ to 0.940 g/cm³ more preferably in the range from 0.920 g/cm³ to 0.930 g/cm³. In a further embodiment, the HMW ethylene-based polymer is the first ethylene-based polymer.

### Low Molecular Weight Reactor:

Preferably, the mole ratio of alpha-olefin to ethylene is less than that used in the high molecular weight reactor, and advantageously at least 0.0005:1, preferably at least 0.001:1, and advantageously less than, or equal to, 0.6:1, more advantageously less than, or equal to, 0.42:1, preferably less than, or equal to, 0.01:1, more preferably less than, or equal to, 0.007:1, most preferably less than, or equal to, 0.006:1. Typically at least some alpha olefin accompanies the high molecular weight reactor contents.

The mole ratio of hydrogen to ethylene can be in the range from 0.01:1 to 3:1, and is preferably in the range from 0.5:1 to 2.2:1.

The operating temperature is generally in the range from 70°C to 115°C. The operating temperature is preferably varied with the desired density to avoid product stickiness in the reactor.

In one embodiment, the melt index, I₂, of the low molecular weight polymer component made in this reactor is in the range from 0.5 dg/min to 3000 dg/min, preferably from 1 dg/min to 1000 dg/min, or from 10 dg/min to 1000 dg/min, or from 50 dg/min to 1000 dg/min, or from 100 dg/min to 1000 dg/min, or from 250 dg/min to 1000 dg/min, or from 500 dg/min to 900 dg/min,. In a further embodiment, the LMW ethylene-based polymer is the second ethylene-based polymer.

The melt flow ratio, I₂₁/I₅, of the low molecular weight polymer component can be in the range from 5 to 15, preferably from 7 to 13. In a further embodiment, the LMW ethylene-based polymer is the second ethylene-based polymer.

The molecular weight, Mw (as measured by Gel Permeation Chromatography) of this polymer is, generally, in the range from 15,800 g/mole to 35,000 g/mole. In a further embodiment, the LMW ethylene-based polymer is the second ethylene-based polymer.

In one embodiment, the density of this LMW polymer is at least 0.900 g/cm³, and is preferably in the range from 0.910 g/cm³ to 0.975 g/cm³, more preferably from 0.950 g/cm³ to 0.975 g/cm³, and most preferably from 0.965 g/cm³ to 0.975 g/cm³. In a further embodiment, the LMW ethylene-based polymer is the second ethylene-based polymer.

### Final Product (First Composition)

The weight ratio of polymer prepared in the "high molecular weight reactor" to polymer prepared in the "low molecular weight reactor" can be in the range of 30:70 to 70:30, and is preferably in the range of 40:60 to 60:40. This is also known as the split.

The density of the final product can be at least 0.940 g/cm³, and is preferably in the range from 0.945 g/cm³ to 0.955 g/cm³.

The final product, as removed from the second reactor, can have a melt index, I₅, in the range from 0.2 dg/min to 1.5 dg/min, preferably from 0.2 dg/min to 1.0 dg/min, more preferably from 0.2 dg/min to 0.5 dg/min.

In one embodiment, the melt flow ratio, I₂₁/I₅, is in the range from 15 to 50, preferably from 20 to 40, more preferably from 20 to 30.

The final product typically has a broad molecular weight distribution (M_{w}/Mₙ), which can be characterized as multimodal. In one embodiment, the molecular weight distribution is reflected in an M_{w}/Mₙ ratio of 10 to 40, preferably 15 to 35, as measured by Gel Permeation Chromatography.

### Azide Compounds

An azide compound contains at least one N₃ moiety, and preferably at least two N₃ moieties. Azide compounds include polyfunctional sulfonyl azides, as disclosed in U.S. Patent 6,521,306. Preferred polyfunctional sulfonyl azides have at least two sulfonyl azide groups (-SO₂N₃) reactive with the polyolefin (for example, an ethylene-based polymer). In one embodiment, the polyfunctional sulfonyl azide has a structure X-R-X, wherein each X is SO₂N₃, and R represents an unsubstituted or inertly substituted hydrocarbyl, hydrocarbyl ether or silicon-containing group, preferably having sufficient carbon, oxygen or silicon, preferably carbon, atoms to separate the sulfonyl azide groups sufficiently, to permit a facile reaction between the polyolefin and the polyfunctional sulfonyl azide.

Polyfunctional sulfonyl azide materials include such compounds as 1,5-pentane bis(sulfonyl azide); 1,8-octane bis(sulfonyl azide); 1,10-decane bis(sulfonyl azide); 1,10-octadecane bis(sulfonyl azide); 1-octyl-2,4,6-benzene tris(sulfonyl azide); 4,4'-diphenyl ether bis(sulfonyl azide); 1,6-bis(4'-sulfonazidophenyl)hexane; 2,7-naphthalene bis(sulfonyl azide); and mixed sulfonyl azides of chlorinated aliphatic hydrocarbons containing an average of from 1 to 8 chlorine atoms and from 2 to 5 sulfonyl azide groups per molecule; and mixtures thereof. Preferred polyfunctional sulfonyl azide materials include oxy-bis(4-sulfonylazidobenzene); 2,7-naphthalene bis(sulfonyl azido); 4,4'-bis(sulfonyl azido)biphenyl; 4,4'-diphenyl ether bis(sulfonyl azide) (also known as diphenyloxide-4,4'-disulfonylazide; and bis(4-sulfonyl azidophenyl)methane; and mixtures thereof. Most preferred is diphenyloxide-4,4'-disulfonylazide (designated DPO-BSA herein).

Sulfonyl azides are conveniently prepared by the reaction of sodium azide with the corresponding sulfonyl chloride, although oxidation of sulfonyl hydrazines with various reagents (nitrous acid, dinitrogen tetroxide, nitrosonium tetratluoroborate) has been used. Polyfunctional sulfonyl azides are also described in U.S. Patent 6,776,924.

For rheology modification, the polyfunctional sulfonyl azide is admixed with the polymer, and heated to at least the decomposition temperature of the polyfunctional sulfonyl azide. By decomposition temperature of the polyfunctional sulfonyl azide, it is meant that temperature at which the polyfunctional sulfonyl azide converts to the sulfonyl nitrene, eliminating nitrogen and heat in the process, as determined by DSC. In one embodiment, the polyfunctional sulfonyl azide begins to react at a kinetically significant rate (convenient for use in the practice of the invention) at temperatures of about 130°C, and is almost completely reacted at about 160°C in a DSC (scanning at 10°C/min). In one embodiment, the onset of decomposition was found to be about 100°C by Accelerated Rate Calorimetry (ARC) scanning at 2°C/hr.

Extent of reaction is a function of time and temperature. Temperatures for use in the practice of the invention are also determined by the softening or melt temperatures of the polymer starting materials. For these reasons, the temperature is advantageously greater than 90°C, preferably greater than 120°C, more preferably greater than 150°C, most preferably greater than 180°C. Preferred reaction times at the desired decomposition temperatures, are times that are sufficient to result in reaction of the azide compound with the polymer(s), without undesirable thermal degradation of the polymer matrix.

Admixing of the polymer and azide compound is accomplished by any means within the skill in the art. Desired distribution is different in many cases, depending on what rheological properties are to be modified. It is desirable to have as homogeneous a distribution as possible, preferably achieving solubility of the azide in the polymer melt.

The term "melt processing" is used to mean any process in which the polymer is softened or melted, such as extrusion, pelletizing, film blowing and casting, thermoforming, compounding in polymer melt form, and other melt processes.

The polymer and azide compound are suitably combined in any manner which results in desired reaction thereof, preferably by mixing the azide compound with the polymer(s) under conditions which allow sufficient mixing before reaction, to avoid uneven amounts of localized reaction, then subjecting the resulting admixture to heat sufficient for reaction.

Any equipment is suitably used; preferably equipment which provides sufficient mixing and temperature control in the same equipment. Preferably, a continuous polymer processing system, such as an extruder, or a semi-continuous polymer processing system, such as a BANBURY mixer, is used. For the purposes of this invention, the term extruder is used, for its broadest meaning, to include such devices as a device which extrudes pellets, as well as devices in which the polymeric material is extruded in the form of sheets or other desired shapes and/or profiles.

Extruders and processes for extrusion are described in U.S. Patents 4,814,135; 4,857,600; 5,076,988; and 5,153,382. Examples of various extruders, which can be used in forming pellets are single screw and multi-screw types. Conveniently, when there is a melt extrusion step between production of the polymer and its use, at least one step of the process takes place in the melt extrusion step. While it is within the scope of the invention that the reaction take place in a solvent or other medium, it is preferred that the reaction be in a bulk phase, to avoid later steps for removal of the solvent or other medium. For this purpose, a polymer above the crystalline melt temperature is advantageous for even mixing, and for reaching a reaction temperature (the decomposition temperature of the azide compound).

In a preferred embodiment, the azide modified polymers are substantially gel free. In order to detect the presence of, and where desirable, quantify, insoluble gels in a polymer composition, the composition is soaked in a suitable solvent, such as refluxing xylene, for 12 hours, as described in ASTM D 2765-90, Method B. Any insoluble portion of the composition is then isolated, dried and weighed, making suitable corrections based upon knowledge of the composition. For example, the weight of "non-polymeric, solvent-soluble components" is subtracted from the initial weight; and the weight of "non-polymeric, solvent-insoluble, components" is subtracted from both the initial and final weight. The insoluble polymer recovered is reported as "percent gel" content (based on the weight of the composition). For purposes of this invention, "substantially gel free" means a percent gel content that is less than 10 percent, preferably less than 8 percent, more preferably less than 5 percent, even more preferably less than 3 percent, still more preferably less than 2 percent, even more preferably less than 0.5 percent, and most preferably below detectable limits when using xylene as the solvent. For certain end use applications where gels can be tolerated, the percent gel content can be higher.

Preferably the inventive compositions do not contain peroxides and/or other types of coupling agents. Examples of other types of coupling agents include phenols; aldehyde-amine reaction products; substituted ureas; substituted guanidines; substituted xanthates; substituted dithiocarbamates; sulfur-containing compounds, such as thiazoles, imidazoles, sulfenamides, thiuramidisulfides, elemental sulfur; paraquinonedioxime; dibenzoparaquinonedioxime; or combinations thereof.

### Film

Film and film structures particularly benefit from this invention, and can be made using conventional blown film fabrication techniques. Conventional blown film processes are described, for example, in The Encyclopedia of Chemical Technology, Kirk-Othmer, Third Edition, John Wiley & Sons, New York, 1981, Vol. 16, pp. 416-417 and Vol. 18, pp. 191-192.

The films may be monolayer or multilayer films. The film made using this invention can also be coextruded with the other layer(s), or the film can be laminated onto another layer(s) in a secondary operation, such as that described in Packaging Foods With Plastics, by Wilmer A. Jenkins and James P. Harrington (1991), or that described in "Coextrusion For Barrier Packaging" by W.J. Schrenk and C.R. Finch, Society of Plastics Engineers RETEC Proceedings, June 15-17 (1981), pp. 211-229..

Extrusion coating is yet another technique for producing multilayer film structures using the novel compositions described herein. The novel compositions comprise at least one layer of the film structure. Similar to cast film, extrusion coating is a flat die technique. A sealant can be extrusion coated onto a substrate, either in the form of a monolayer or a coextruded extrudate.

Generally for a multilayer film structure, a novel composition, described herein, comprises at least one layer of the total multilayer film structure. Other layers of the multilayer structure may include, but are not limited to, barrier layers, and/or tie layers, and/or structural layers. Various materials can be used for these layers, with some of them being used as more than one layer in the same film structure. Some of these materials include the following: foil, nylon, ethylene/vinyl alcohol (EVOH) copolymers, polyvinylidene chloride (PVDC), poly(ethylene terephthalate) (PETE), oriented polypropylene (OPP), ethylene/vinyl acetate (EVA) copolymers, ethylene/acrylic acid (EAA) copolymers, ethylene/methacrylic acid (EMAA) copolymers, low density polyethylene (LDPE), linear low density polyethylene (LLDPE), high density polyethylene (HDPE), nylon, graft adhesive polymers (for example, maleic anhydride grafted polyethylene), and paper. Generally, a multilayer film structures comprise from 2 to 7 layers.

### DEFINITIONS

The term "polymer" is used herein to indicate, a homopolymer (employed to refer to polymers prepared from one type of monomer, with the understanding that trace amounts of impurities can be incorporated into the polymer structure), and an interpolymer, as described herein.

The term "interpolymer," as used herein, refers to polymers prepared by the polymerization of at least two different types of monomers. The generic term interpolymer thus includes copolymers (employed to refer to polymers prepared from two different types of monomers), and polymers prepared from more than two different types of monomers.

The term "ethylene-based polymer," as used herein, refers to a polymer that comprises, in polymerized form, a majority weight percent ethylene (based on the weight of the polymer), and, optionally, one or more additional comonomers.

The term "ethylene-based interpolymer," as used herein, refers to an interpolymer that comprises, in polymerized form, a majority weight percent ethylene (based on the weight of the interpolymer), and one or more additional comonomers.

The term "ethylene/α-olefin interpolymer," as used herein, refers to an ethylene-based interpolymer that comprises, in polymerized form, a majority weight percent ethylene (based on the weight of the interpolymer), an α-olefin, and optionally, one or more additional comonomers.

The term "ethylene/α-olefin copolymer," as used herein, refers to an ethylene-based copolymer that comprises, in polymerized form, a majority weight percent ethylene (based on the weight of the copolymer), and an α-olefin, and no other comonomers.

The term "coupling amount," as used herein, refers to an amount of the one or more azide compounds that is effective in coupling polymer chains, and results in a "substantially gel free" composition as defined above.

The terms "blend" or "polymer blend," as used herein, mean a blend of two or more polymers. Such a blend may or may not be miscible (not phase separated at molecular level). Such a blend may or may not be phase separated. Such a blend may or may not contain one or more domain configurations, as determined from transmission electron spectroscopy, light scattering, x-ray scattering, and other methods known in the art.

The terms "comprising," "including," "having," and their derivatives, are not intended to exclude the presence of any additional component, step or procedure, whether or not the same is specifically disclosed. In order to avoid any doubt, all compositions claimed through use of the term "comprising" may include any additional additive, adjuvant, or compound, whether polymeric or otherwise, unless stated to the contrary. In contrast, the term, "consisting essentially of" excludes from the scope of any succeeding recitation any other component, step or procedure, excepting those that are not essential to operability. The term "consisting of" excludes any component, step or procedure not specifically delineated or listed.

### TEST METHODS

Resin density was measured by the Archimedes displacement method, ASTM D 792-03, Method B, in isopropanol. Specimens were measured within one hour of molding, after conditioning in an isopropanol bath at 23°C for eight minutes, to achieve thermal equilibrium prior to measurement. The specimens were compression molded according to ASTM D-4703-00, Annex A, with a five minute initial heating period, at approximately 190°C and 690 kPa gauge (100 psig), a three minute heating period at approximately 190°C at 103 MPa gauge (1500 psig), and then cool at 15°C/min cooling rate per Procedure C. The specimen (about 45 mm in diameter and about 2 mm thick) was cooled to 45°C in the press under 103 MPa gauge (1500 psig), with continued cooling until "cool to the touch".

Melt flow rate measurements were performed according to ASTM D-1238-04, Condition 190°C/2.16 kg, Condition 190°C/5.0 kg, and Condition 190°C/21.6 kg which are known as I₂, I₅, and I₂₁, respectively. Melt flow rate is inversely proportional to the molecular weight of the polymer. Thus, the higher the molecular weight, the lower the melt flow rate, although the relationship is not linear. The I₂₁ is also referred to as the "high load melt index." Melt Flow Ratio (MFR) is the ratio of I₂₁ to I₂, unless otherwise specified. For example, in some instances the MFR may be expressed as I₂,/I₅, especially for higher molecular weight polymers.

Dart impact strength was measured according to ASTM D 1709-04, Method A, by the staircase technique, with the dart dropped around the circumference of the film sample. Film specimens had the following thickness: 0.0127mm (0.0005 inch) 25µm (0.5 mil; 13 µm) The specimens were taken from a blown film line, after at least three minutes of blowing the film with a clean die lip to avoid scratches. To avoid aging effects, dart impact strength was measured within one hour after the samples were taken.

### FAR

A Film Appearance Rating (FAR) value was obtained by comparing 25µm (0.001 inch (1 mil) thick" extruded film to "38µm 0.015 inch (1.5 mil)" film standards. Six standard films (having an approximate area of 60,000 mm² each (200 mm by 300 mm, each)) were used. Each standard film was prepared from a high density polyethylene resin. The first standard (#1) had a FAR rating -50 (extremely poor appearance and very excessive quantities of small, medium and large gels; for example, a large gel (greater than 500 µm) content of greater than 40 per m² of film). The second standard (#2) had a FAR rating -30 (very poor appearance and very large quantities of small, medium and large gels; for example, a large gel content from 21 per m² to 40 per m² of film). The third standard (#3) had a FAR rating -10 (poor appearance and large quantities of small, medium and large gels; for example, a large gel content from 11 per m² to 20 per m² of film). The fourth standard (#4) had a FAR rating +10 (marginal appearance and medium quantities of small, medium and large gels; for example, a large gel content of greater from 4 per m² to 10 m² of film). The fifth standard (#5) had a FAR rating +30 (acceptable appearance and very low quantities of small, medium and large gels; for example, a large gel content from 1 per m² to 3 per m² of film). The sixth standard (#6) had a FAR rating +50 (very good appearance, and extremely low quantities of small and medium gels, and essentially free of large gels).

### Bubble Stability

Failure of bubble stability is defined as the inability to control the bubble, and to form film with excellent gauge (thickness) uniformity. Bubble stability was measured on the following blown film line, commercially available from Hosokawa Alpine Corporation, under the following conditions:
Extruder and film line operating parameters
Barrel Zone 1 199°C (390°F)
Barrel Zone 2 204°C (400°F)
Adapter Bottom 204°C (400°F)
Adapter Vertical 210°C (410°F)
Bottom Die 210°C (410°F)
Middle Die 210°C (410°F)
Top Die 210°C (410°F)
Output Rate 45 4kg/h (100 1b/h)
Blow Up Ratio (BUR) 4:1
Neck Height 0.81m (32 in)
Frost Line Height 1.07m (42 in)
Melt Temperature 210°C (410°F)
Lay Flat Width 0.64m (25.25 in)
Film Thicknesses 25µm (0.001 inch (1.0 mil)) 13µm (0.0005 inch (0.5 mil))

Blown film equipment description
Alpine HS50S stationary extrusion system
   - 50 mm 21:1 L/D grooved feed extruder
   - 60 hp (44.8 kW) DC drive
   - extruder has a cylindrical screen changer
   - standard control panel with nine RKC temperature controllers
Alpine Die BF 10-25
   - 12 spiral design
   - complete with insert to make up a 100 mm die diameter
Alpine Air Ring HK 300
   - single lip design
   - air lips for a 100 mm die diameter
   - 7.5 hp (5.6 kW) blower with variable speed AC drive
Bubble calibration Iris Model KI 10-65
   - lay flat width (LFW) range 0.178m to 0.991m (7 inch to 39 inch)
Alpine Take-Off Model A8
   - collapsing frame with side guides with hard wood slats
   - maximum lay flat width (LFW): 0.787m (31 in)
   - roller face width 0.889m (35 in)
   - maximum takeoff speed: 2.54m/s (500 ft/min)
   - 4 idler rolls
Alpine surface winder Model WS8
   - maximum LFW: 0.787m (31 in)
   - roller face width: 0.889m (35 in)
   - maximum line speed: 2.54m/s (500 ft/mim)
   - automatic cutover

Unless stated otherwise, gravimetric feed was used. Blowing and winding were initiated and established at an output rate of 45.4kg/h (100 lb/h) and winding a 0.42m/s (82.5 ft/min), with a neck height of 0.81m (32.0 in) with a layflat width of 0.622m (24.5 in), with a symmetrical bubble producing a film approximately 25µm (0.001 inch (1.0 mil) thick. These conditions were maintained for at least 20 minutes, after which, a 3.05m a (10 ft) sample was collected for Film Appearance Rating (FAR), as previously described. Then the haul-off speed was increased to 0.84m/s (165 ft/min), such that the film thickness was decreased to 13µm (0.0005 inch (0.5 mil). Both the neck height and lay flat width were maintained. Enough film was taken on a roll, to avoid wrinkles, for the collection of at least eight "Dart Impact Strength" samples, as previously described. Samples were taken after at least three minutes run time, with a clean die lip to avoid scratches. Continuing, the conditions of 45.4kg/h (100 lb/h) output rate, 0.84m/s (165 ft/min) haul-off speed, 0.81m (32.0 in) neck height, and 0.622m (24.5 in) lay-flat, 13µm (0.5 mil) film thickness, the bubble blown in the process was visually observed for helical instability or bubble diameter oscillation. Helical instability involves decreases in diameter in a helical pattern around the bubble. Bubble diameter oscillation involves alternating larger and smaller diameters. A bubble is considered stable, in others words passing, as long as neither of these conditions (helical instability and bubble diameter oscillation) is observed during the formation of the complete roll film (about ten minutes for about 502.9m (1650 feet) of film), even though some bubble chatter may be observed.

### Resin Rheology

The resin rheology was measured on the ARES I (Advanced Rheometric Expansion System) Rheometer. The sample composition was compression molded into a disk for rheology measurement. The disks were prepared by pressing the samples into 1.8mm (0.071 inch) thick plaques, and were subsequently cut into 25.4mm (one inch) diameter" disks. The compression molding procedure was as follows: 185°C (365°F) for 5 min at 689 kPa gauge (100 psig) for 3 min at 10.3MPa gauge (500 psig); cooling at 15°C (27°F)/min, under 10.3 MPa gauge (1500 psig) to 45°C, then the pressure was released, and the sample was removed from the press, and cooled to ambient temperature (about 23°C).

The ARES is a strain controlled rheometer. A rotary actuator (servomotor) applies shear deformation in the form of strain to a sample. In response, the sample generates torque, which is measured by the transducer. Strain and torque are used to calculate dynamic mechanical properties, such as modulus and viscosity. The viscoelastic properties of the sample were measured in the melt using a parallel plate set up, at constant strain (10%) and temperature (190°C), and as a function of varying frequency (0.01 s⁻¹ to 100 s⁻¹). The storage modulus (G'), loss modulus (G"), tan delta, and complex viscosity (eta*) of the resin were determined using Rheometrics Orchestrator software (v. 6.5.8).

Rheotens (Goettfert Inc., Rock Hill, SC, USA) melt strength experiments were carried out at 190°C. The melt was produced by a Gottfert Rheotester 2000 capillary rheometer with a flat, 30/2 die, at a shear rate of 38.2 s⁻¹. The barrel of the rheometer (diameter: 12 mm) was filed in less than one minute. A delay of ten minutes was allowed for proper melting. The take-up speed of the Rheotens wheels was varied, with a constant acceleration of 2.4 mm/sec². The tension in the drawn strand was monitored with time, until the strand broke. The steady-state force and the velocity at break were reported.

### EXPERIMENTAL

### Preparation of Catalyst Precursor

A typical catalyst precursor preparation was as follows, although one skilled in the art could readily vary the amounts employed, depending on the amount of polymer required to be made.

A titanium trichloride catalyst component was prepared in a "1900 liter" vessel, equipped with pressure and temperature control, and a turbine agitator. A nitrogen atmosphere (less than 5 ppm (parts by weight per million) H₂O) was maintained at all times.

One thousand four hundred and eighty liters (14801) of anhydrous tetrahydrofuran (less than 40 ppm H₂O) was added to the vessel. The tetrahydrofuran was heated to a temperature of 50°C, and granular magnesium metal (1.7 kg; 70.9 moles) was added, followed by 27.2 kg of titanium tetrachloride (137 moles). The magnesium metal had a particle size in the range of from 0.1 mm to 4 mm. The titanium tetrachloride was added over a period of about 30 minutes.

The mixture was continuously agitated. The exotherm resulting from the addition of titanium tetrachloride caused the temperature of the mixture to rise to approximately 72°C, over a period of about three hours. The temperature was held at about 70°C, by heating for approximately another four hours. At the end of this time, 61.7 kg of magnesium dichloride (540 moles) was added, and heating was continued at 70°C for another eight hours. The mixture was then filtered through a "100 µm filter" to remove undissolved magnesium dichloride and any unreacted magnesium (less than 0.5 percent).

One hundred kilograms (100 kg) of fumed silica (CAB-O-SIL.RTM. TS-610, manufactured by the Cabot Corporation) was added to the precursor solution over a period of about two hours. The mixture was stirred by means of a turbine agitator during this time, and for several hours thereafter, to thoroughly disperse the silica in the solution. The temperature of the mixture was held at 70°C throughout this period, and a dry nitrogen atmosphere was maintained at all times.

The resulting slurry was spray dried using an 2.4m (8 foot) diameter, closed cycle spray dryer, equipped with a NIRO FS-15 rotary atomizer. The rotary atomizer was adjusted to give catalyst particles with a D₅₀ on the order of 20 µm to 30 µm. The D₅₀ was controlled by adjusting the speed of the rotary atomizer. The scrubber section of the spray dryer was maintained at approximately -5°C.

Nitrogen gas was introduced into the spray dryer at an inlet temperature of 140°C to 165°C, and was circulated at a rate of approximately 1700 kg/h to 1800 kg/hr. The catalyst slurry was fed to the spray dryer at a temperature of about 35°C, and a rate of 65 kg/h to 100 kg/h, or sufficient to yield an outlet gas temperature in the range of 100°C to 125°C. The atomization pressure was slightly above atmospheric.

The discrete catalyst precursor particles were then mixed with mineral oil, under a nitrogen atmosphere, in a 400 liter vessel equipped with a turbine agitator to form a slurry containing approximately 28 weight percent of the solid catalyst precursor.

### Polymerization

The catalyst precursor slurry, triethylaluminum cocatalyst, ethylene, alpha-olefin, and hydrogen were continuously fed into the first reactor; the polymer/active catalyst mixture was continuously transferred from the first reactor to the second reactor; ethylene, hydrogen, and triethylaluminum cocatalyst were continuously fed to the second reactor. The final product was continuously removed from the second reactor.

Polymerization conditions for two resins are shown in Table 1. Each polymerization was run in two reactors, configured in series. A Ziegler-Natta type catalyst (see above) was used in each polymerization. Selected properties of each composition are shown in Table 2.

**Table 1: Polymerization Conditions**

| Example | Resin I | | Resin II | |
|---|---|---|---|---|
| Reactor | R1* | R2** | R1 | R2 |
| Temperature, °C | 75 | 110 | 80 | 110 |
| Pressure kPag (psig) | 1.95 (284) | 2.96 (430) | 1.88 (273) | 2.80 (406) |
| C2 partial pressure kPaa (psig) | 0.267 (38.7) | 0.674 (97.7) | 0.234 (34.0) | 0.511 (74.1) |
| H2 to C2 molar ratio | 0.025 | 1.80 | 0.029 | 1.80 |
| C6 to C2 molar ratio | 0.044 | 0.005 | 0.040 | 0.002 |
| IC5, mole % (based upon total gas composition) | 10.31 | 3.04 | 13.84 | 7.38 |
| Triethylaluminium Feed kg/h (lb/h) | 4.87 (10.7) | 2.02 (4.5) | 3.43 (7.6) | 2.03(4.5) |
| Production Rate mg/h (klb/h) | 20.9 (46.1) | 16.1 (35.6) | 18.5 (40.9) | 13.0 (28.7) |
| UCAT-J Feed kg/h (lb/h) | 9.08 (20.0) | 0 (0) | 6.36 (14) | 0(0) |
| Bed Weight, Mg (klb) | 42.7 (94.2) | 79.5 (175) | 38.2 (84.1) | 85.9 (190) |
| Residence Time, h | 2.0 | 2.1 | 2.1 | 2.7 |
| Superficial gas velocity, m/s (ft/s) | 0.583 (1.91) | 0.614 (2.01) | 0.501 (1.64) | 0.545 (1.79) |
| Percent Condensing, wt % | 7.15 | 0.00 | 9.44 | 0.00 |
| Production Rate Split, wt % | 56.5 | 43.5 | 58.8 | 41.2 |

| | | | | |
|---|---|---|---|---|
| *ethylene-based polymer (or first ethylene-based polymer) ** first composition | | | | |

**Table 2: Resin I and Resin II Properties**

| Example | Resin I | | Resin II | |
|---|---|---|---|---|
| Reactor | R1* | R2** | R1 | R2 |
| Melt Index (I₅), dg/min | | 0.36 | | 0.38 |
| High Load Melt Index (I₂₁), dg/min | 0.27 | 9.17 | 0.47 | 9.12 |
| Melt Flow Ratio, I₂₁/I₅ | | 25.7 | | 24.3 |
| Density, kg/m³ | 926.3 | 948.6 | 928.6 | 949.4 |
| Bulk Density, lb/ft³ (kg/m³) | 20.5 (328) | 25.0 (400) | 22.5 (360) | 28.7 (460) |
| Average particle size, in (mm) | 0.029 (0.74) | 0.030 (0.76) | 0.027 (0.69) | 0.028 (0.71) |
| Percent Fines, wt % | 1.4 | 2.1 | 1.4 | 2.6 |
| I₂₁(R2) / I₂₁(R1) ratio | | 34.0 | | 19.4 |

| | | | | |
|---|---|---|---|---|
| * ethylene-based polymer (or first ethylene-based polymer) * first composition | | | | |

### Azide Treatment

Resin I and Resin II were modified with DPO-BSA (diphenyloxide-4,4'-disulfonylazide), in the form of a Molecular Melt (MM), in the presence of additives, such as IRGANOX-1076, zinc stearate and calcium stearate. The azide was used in a range of 25 µg/g to 150 µg/g.

"Molecular Melt" (MM) is the specific form of an azide composition received from Dynamit Nobel GmbH. This is not a physical mixture, but rather a granulated melt of DPO-BSA with IRGANOX-1010.

The Molecular Melt was added along with other additives to each resin, and the resin formulation was fed to a continuous mixer (Kobe Steel, Ltd. LCM-100 continuous mixer), which was closed coupled to a gear pump, and equipped with a melt filtration device and an underwater pelletizing system. No visible gels were formed, and greater than 75 weight percent of the IRGANOX-1076 was maintain in its original chemical form.

The formulations (or compositions) for azide modification, and the extrusion conditions, are shown in Table 3 below. Commercial resin A (Com. Resin A) is ALATHON L 5005 High Density Polyethylene (available from Equistar), and commercial resin B (Com. Resin B) is Dow DGDC-2100 NT 7 High Density Polyethylene (available from The Dow Chemical Company). Both are high molecular weight, high density resins used for film products. The azide modified resins had higher viscosities at low shear rates, and higher melt strength, compared to the non-azide modified samples.

Each "non-azide modified" resins (control samples), azide modified resins, and commercial resins were formed into a blown film. See test method for "bubble stability" above for the film equipment and conditions. Additional operating conditions are shown in Table 3. The film properties are also shown in Table 3.

**Table 3: Composition, Extrusion Process Operating Conditions, Film Operating Conditions. and Film Property Results**

| | Com. Resin A | Com. Resin B | Comp. A | Ex. 1 | Comp. B | Comp. C | Comp. D | Comp. E | Comp. F | Comp. G |
|---|---|---|---|---|---|---|---|---|---|---|
| DPO-BSA, µg/g | | | 0 | 25 | 50 | 100 | 0 | 25 | 50 | 100 |
| **Resin** | Resin A | Resin B | Resin I | Resin I | Resin I | Resin I | Resin II | Resin II | Resin II | Resin II |
| R1 I₂₁, dp/min | | | 0.27 | 0.27 | 0.27 | 0.27 | 0.47 | 0.47 | 0.47 | 0.47 |
| I₂₁ (R2) to I₂₁ (R1) Ratio | | | 34.0 | 34.0 | 34.0 | 34.0 | 19.4 | 19.4 | 19.4 | 19.4 |
| **Formulation (Composition)** | | | | | | | | | | |
| Iganox 1076, µg/g | | | 800 | 800 | 800 | 800 | 800 | 800 | 800 | 800 |
| Zinc Stearate, µg/g | | | 500 | 500 | 500 | 500 | 500 | 500 | 500 | 500 |
| Calcium Stearate, µg/g | | | 1000 | 1000 | 1000 | 1000 | 1000 | 1000 | 1000 | 1000 |
| Molecular Melt, µg/g | | | 0 | 100 | 200 | 400 | 0 | 100 | 200 | 400 |
| Resin, wt% | 100 | 100 | balance | balance | balance | balance | balance | balance | balance | balance |
| **Extrusion Operating Conditions** | | | | | | | | | | |
| Rate, kg/hr | | | 186 | 186 | 186 | 186 | 186 | 186 | 186 | 186 |
| Mixer Speed, rpm | | | 220 | 220 | 220 | 220 | 220 | 220 | 220 | 220 |
| Mixer Gate Position, % open | | | 10 | 10 | 10 | 10 | 10 | 10 | 10 | 10 |
| Mixer Discharge Pressure, kpag | | | 48 | 48 | 48 | 48 | 48 | 48 | 48 | 48 |
| Barrel Temperatures, °C | | | 180 | 1809 | 180 | 180 | 180 | 180 | 180 | 180 |
| Polvmer Temperature, °C | | | 221 | 221 | 221 | 229 | 228 | 229 | 229 | 232 |
| **Physical Properties** | | | | | | | | | | |
| Tan δ @ 0.1 s⁻¹ and 190°C | | | 1.61 | 1.36 | 1.25 | 1.12 | | | | |
| Tan δ @ 1.0 s⁻¹ and 190°C | | | 1.10 | 1.02 | 0.97 | 0.91 | | | | |
| Viscosity, Pa-s @ 0.01 s⁻¹ and 190°C | | | 205,980 | 280,220 | 317,540 | 386,700 | | | | |
| Viscosity, Pa-s @ 0.1 s⁻¹ and 190°C | | | 102,050 | 120,760 | 128,110 | 143,260 | | | | |
| Viscosity, Pa-s @ 1.0 s⁻¹ and 190°C | | | 40,483 | 44,043 | 44,552 | 46,823 | | | | |
| Viscosity, Pa-s @ 10.0 s⁻¹ and 190°C | | | 11,781 | 12,374 | 12,242 | 12,417 | | | | |
| Viscosity, Pa-s @ 100.0 s⁻¹ and 190°C | | | 2,502 | 2,596 | 2,554 | 2,549 | | | | |
| Melt Strength, cN @ 4mm/s | | | 11.7 | 13.8 | 14.5 | 18.2 | | | | |
| **Film Operating Conditions** | | | | | | | | | | |
| Melt Temperature, °C | 209 | 208 | 208 | 208 | 208 | 208 | 208 | 208 | 208 | 208 |
| Rate, kg/h | 45.4 | 45.4 | 45.4 | 45.4 | 45.4 | 45.4 | 45.4 | 45.4 | 45.4 | 45.4 |
| Screw speed, rev/min | 82 | 84 | 84 | 84 | 83 | 83 | 83 | 83 | 83 | 83 |
| **Film Properties** | | | | | | | | | | |
| Dart Impact Strength (13 µm), g | 333 | 350 | utm | 486 | 261 | 99 | utm | 345 | 255 | 81 |
| Side-to-Side Bubble Stability, pass/fail | Pass | Pass | Fail | Pass | Pass | Pass | Fail | Pass | Pass | Pass |
| FAR | 40 | 40 | 30 | 40 | 40 | 50 | 40 | 40 | 50 | 40 |

| | | | | | | | | | | |
|---|---|---|---|---|---|---|---|---|---|---|
| utm = unable to measure - unable to make 13 µm thick film due to poor bubble stability. | | | | | | | | | | |

As shown in Table 3, the film formed from the inventive composition (Ex. 1) had an unexpectedly high Dart Impact Strength, compared to the other comparative films, and good bubble stability. The dart impact strength of the inventive film increased by more than 40 percent, as compared to the dart impact strength of Comparative Sample E. The dart impact strength of "486 gram" for the inventive film is about a 39 percent increase over the "350 gram" for the film prepared from the Commercial Resin B, and is about a 46 percent increase over the "333 gram" for the film prepared from the Commercial Resin A.

It has been unexpectedly discovered that a much lower level of azide compound, as used in the inventive composition, in combination with the I₂₁(first composition)/I₂₁(first ethylene-based polymer) of this composition, produced good bubble stability (melt strength), good FAR (Film Appearance Rating) results, and high dart impact strength. The FARs of the films formed from an azide modified composition were at least "10 FAR units" above the minimum acceptable FAR of +30.

The side-to-side bubble test (pass/fail) is typically used as a gauge of bubble stability. The bubble stability of the untreated, Comparative Samples A and D (0 µg/g azide) was unacceptable, whereas the film formed from the inventive composition had good bubble stability (commercially acceptable levels).

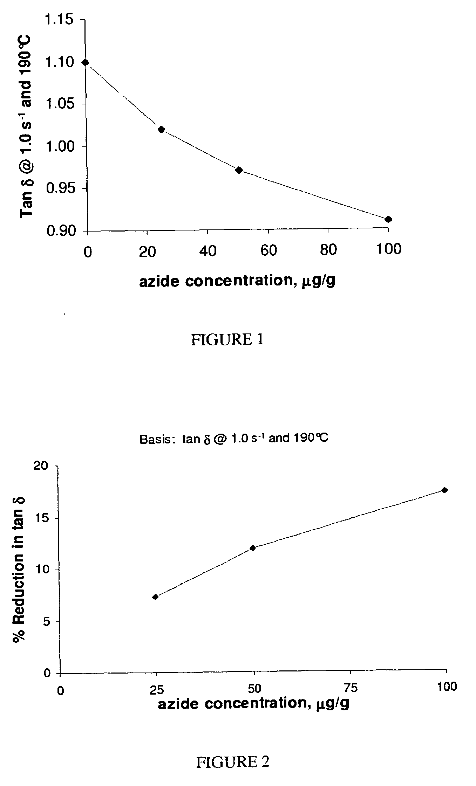

As seen from Figure 1 (Resin I), as the azide concentration increased, the tan δ decreased, indicating that the molecular structure had enlarged due to the addition of long chain branching. At azide concentrations of 50 ppm and higher, the tan δ significantly decreased (11+%), and therefore, a significant change in the polymer structure occurred (see also Figure 2). It has been discovered that decreasing the amount of azide to 40 µg/g, preferably 30 µg/g and lower, maintains bubble stability, and also results in minimum/negligible change to the molecular structure of the polymer, thereby preserving/maintaining feedstock properties of the resin prior to azide treatment.

The modified compositions of the invention result in higher melt viscosity at low shear rate, and consequently higher melt strength, as compared to the unmodified base resins. This enhancement is of importance in many applications requiring higher melt strength, including blown films that require increased bubble stability, without sacrificing the dart impact strength of the "as polymerized" feedstock. This improvement is also gained without significantly affecting the viscosities at shear rates of 10 s⁻¹ (mid shear rate), and 100 s⁻¹ (high shear rate), which represent typical extrusion conditions, and thereby maintaining extrusion property responses, similar to those of unmodified resins, including machine throughput rates, which are highly desired by film extruders. See Table 3.

## Claims

1. A composition comprising at least the following:
A) a first composition comprising a first ethylene-based polymer, wherein the ratio, I₂₁ (first composition) / I₂₁ (first ethylene-based polymer), is greater than, or equal to, 30 wheren I₂₁ is measured according to ASTM-D-1238-04, condition 190°C/21-6 kg; and
B) one or more azide compounds in an amount from 10 µg/g to 40 µg/g (based on the weight of the composition).

2. The composition of any of the previous claims, wherein the first ethylene-based polymer has a high load melt index (I₂₁) less than, or equal to, 0.40 dg/min.

3. The composition of any of the previous claims, wherein the first ethylene-based polymer has a high load melt index (I₂₁) greater than, or equal to, 0.20 dg/min, preferably greater than, or equal to, 0.25 dg/min.

4. The composition of any of the previous claims, wherein the first composition has a density greater than 0.940 g/cm³, preferably greater than 0.945 g/cm³.

5. The composition of any of the previous claims, wherein the first composition has a melt flow ratio (I₂₁/I₅) from 25 to 45, preferably from 30 to 40.

6. The composition of any of the previous claims, wherein the first composition has a high load melt index (I₂₁) from 6 dg/min to 12 dg/min.

7. The composition of any of the previous claims, wherein the composition comprises greater than 80 weight percent of the first composition, based on the weight of the composition.

8. The composition of any of the previous claims, wherein the first ethylene-based polymer has a density greater than, or equal to, 0.920 g/cm³.

9. The composition of any of the previous claims, wherein the first ethylene-based polymer is an ethylene/α-olefin interpolymer.

10. The composition of Claim 9, wherein the α-olefin is selected from the group consisting of propylene, 1-butene, 1-hexene, and 1-octene.

11. The composition of any of the previous claims, wherein the first composition comprises from 50 to 58 percent by weight of the first ethylene-based polymer, based on the weight of the first composition.

12. A film, comprising at least one layer formed from the composition of any of the previous claims.

13. The film of Claim 12, wherein the film has a dart impact strength greater than 400 g, as determined by ASTM D 1709-04, Method A.

14. An article comprising at least one component formed from the composition of any of claims 1-11.

15. An article formed from the composition of any of claims 1-11.

## Patentansprüche

1. Eine Zusammensetzung, die mindestens das Folgende beinhaltet:
A) eine erste Zusammensetzung, die ein erstes Polymer auf Ethylenbasis beinhaltet, wobei das Verhältnis I₂₁ (erste Zusammensetzung) : I₂₁ (erstes Polymer auf Ethylenbasis) größer als oder gleich 30 ist, wobei I₂₁ gemäß ASTM-D-1238-04, Bedingung 190 °C/21,6 kg, gemessen wird; und
B) eine oder mehrere Azidverbindungen in einer Menge von 10 µg/g bis 40 µg/g (bezogen auf das Gewicht der Zusammensetzung).

2. Zusammensetzung gemäß einem der vorhergehenden Ansprüche, wobei das erste Polymer auf Ethylenbasis einen Hochlastschmelzindex (I₂₁) von weniger als oder gleich 0,40 dg/min aufweist.

3. Zusammensetzung gemäß einem der vorhergehenden Ansprüche, wobei das erste Polymer auf Ethylenbasis einen Hochlastschmelzindex (I₂₁) von mehr als oder gleich 0,20 dg/min, vorzugsweise mehr als oder gleich 0,25 dg/min, aufweist.

4. Zusammensetzung gemäß einem der vorhergehenden Ansprüche, wobei die erste Zusammensetzung eine Dichte von mehr als 0,940 g/cm³, vorzugsweise von mehr als 0,945 g/cm³, aufweist.

5. Zusammensetzung gemäß einem der vorhergehenden Ansprüche, wobei die erste Zusammensetzung ein Schmelzflussverhältnis (I₂₁ : I₅) von 25 bis 45, vorzugsweise von 30 bis 40, aufweist.

6. Zusammensetzung gemäß einem der vorhergehenden Ansprüche, wobei die erste Zusammensetzung einen Hochlastschmelzindex (I₂₁) von 6 dg/min bis 12 dg/min aufweist.

7. Zusammensetzung gemäß einem der vorhergehenden Ansprüche, wobei die Zusammensetzung bezogen auf das Gesamtgewicht der Zusammensetzung zu mehr als 80 Gewichtsprozent die erste Zusammensetzung beinhaltet.

8. Zusammensetzung gemäß einem der vorhergehenden Ansprüche, wobei das erste Polymer auf Ethylenbasis eine Dichte von mehr als oder gleich 0,920 g/cm³ aufweist.

9. Zusammensetzung gemäß einem der vorhergehenden Ansprüche, wobei das erste Polymer auf Ethylenbasis ein Ethylen/a-Olefin-Mischpolymer ist.

10. Zusammensetzung gemäß Anspruch 9, wobei das α-Olefin ausgewählt ist aus der Gruppe, bestehend aus Propylen, 1-Buten, 1-Hexen und 1-Octen.

11. Zusammensetzung gemäß einem der vorhergehenden Ansprüche, wobei die erste Zusammensetzung bezogen auf das Gewicht der ersten Zusammensetzung zu 50 bis 58 Gewichtsprozent das erste Polymer auf Ethylenbasis beinhaltet.

12. Eine Folie, die mindestens eine aus der Zusammensetzung gemäß einem der vorhergehenden Ansprüche gebildete Schicht beinhaltet.

13. Folie gemäß Anspruch 12, wobei die Folie eine Schlagzähigkeit von mehr als 400 g, wie durch ASTM D 1709-04, Verfahren A, bestimmt, aufweist.

14. Ein Artikel, der mindestens eine aus der Zusammensetzung gemäß einem der Ansprüche 1-11 gebildete Komponente beinhaltet.

15. Ein Artikel, der aus der Zusammensetzung gemäß einem der Ansprüche 1-11 gebildet ist.

## Revendications

1. Une composition comprenant au moins ce qui suit :
A) une première composition comprenant un premier polymère à base d'éthylène, dans laquelle le rapport, I₂₁ (première composition) / I₂₁ (premier polymère à base d'éthylène), est supérieur ou égal à 30, I₂₁ étant mesuré selon l'ASTM-D-1238-04, Condition 190 °C / 21,6 kg ; et
B) un ou plusieurs composés azoture dans une quantité allant de 10 µg/g à 40 µg/g (rapporté au poids de la composition).

2. La composition de n'importe lesquelles des revendications précédentes, dans laquelle le premier polymère à base d'éthylène a un indice de fluidité à chaud sous forte charge (I₂₁) inférieur ou égal à 0,40 dg/min.

3. La composition de n'importe lesquelles des revendications précédentes, dans laquelle le premier polymère à base d'éthylène a un indice de fluidité à chaud sous forte charge (I₂₁) supérieur ou égal à 0,20 dg/min, de préférence supérieur ou égal à 0,25 dg/min.

4. La composition de n'importe lesquelles des revendications précédentes, dans laquelle la première composition a une masse volumique supérieure à 0,940 g/cm³, de préférence supérieure à 0,945 g/cm³.

5. La composition de n'importe lesquelles des revendications précédentes, dans laquelle la première composition a un rapport de fluidité à chaud (I₂₁/I₅) allant de 25 à 45, de préférence de 30 à 40.

6. La composition de n'importe lesquelles des revendications précédentes, dans laquelle la première composition a un indice de fluidité à chaud sous forte charge (I₂₁) allant de 6 dg/min à 12 dg/min.

7. La composition de n'importe lesquelles des revendications précédentes, la composition comprenant plus de 80 pour cent en poids de la première composition, rapporté au poids de la composition.

8. La composition de n'importe lesquelles des revendications précédentes, dans laquelle le premier polymère à base d'éthylène a une masse volumique supérieure ou égale à 0,920 g/cm³.

9. La composition de n'importe lesquelles des revendications précédentes, dans laquelle le premier polymère à base d'éthylène est un interpolymère d'éthylène/α-oléfine.

10. La composition de la revendication 9, dans laquelle l'α-oléfine est sélectionnée dans le groupe constitué du propylène, du 1-butène, du 1-hexène, et du 1-octène.

11. La composition de n'importe lesquelles des revendications précédentes, dans laquelle la première composition comprend de 50 à 58 pour cent en poids du premier polymère à base d'éthylène, rapporté au poids de la première composition.

12. Un film, comprenant au moins une couche formée à partir de la composition de n'importe lesquelles des revendications précédentes.

13. Le film de la revendication 12, le film ayant une résistance au choc au mouton supérieure à 400 g, telle que déterminée par l'ASTM D 1709-04, Méthode A.

14. Un article comprenant au moins un constituant formé à partir de la composition de n'importe lesquelles des revendications 1 à 11.

15. Un article formé à partir de la composition de n'importe lesquelles des revendications 1 à 11.
